Europäisches Patentamt

European Patent Office

Office européen des brevets

(11) Numéro de publication: **0 427 617 A1**

# DEMANDE DE BREVET EUROPEEN

(21) Numéro de dépôt: 90403146.5

(22) Date de dépôt: 07.11.90

(51) Int. Cl.⁵: **C22C 37/06, C03B 23/03**

(30) Priorité: **09.11.89 DE 3937347**

(43) Date de publication de la demande:
**15.05.91 Bulletin 91/20**

(84) Etats contractants désignés:
**BE CH DE ES FR GB IT LI LU**

(71) Demandeur: **SAINT-GOBAIN VITRAGE INTERNATIONAL**
**"Les Miroirs" 18, avenue d'Alsace**
**F-92400 Courbevoie(FR)**
(84) **BE CH ES FR GB IT LI LU**

Demandeur: **VEGLA Vereinigte Glaswerke GmbH**
**Viktoriaallee 3-5**
**W-5100 Aachen(DE)**
(84) **DE**

(72) Inventeur: **Jacob, Michel**
**37, avenue Jean-Moulin**
**F-75014 Paris(FR)**
Inventeur: **Kuster, Hans-Werner**
**Schervierstrasse 20**
**W-5100 Aachen(DE)**

(74) Mandataire: **Menes, Catherine et al**
**SAINT-GOBAIN RECHERCHE 39, Quai Lucien Lefranc**
**F-93300 Aubervilliers(FR)**

(54) **Utilisation de certaines compositions de fonte pour des formes de bombage par pressage de feuilles de verre.**

(57) L'invention propose pour la réalisation d'une forme de bombage par pressage l'emploi d'une fonte dont la composition est la suivante : carbone : 3,0-3,6 %, silicium 1,5-2,5 %, chrome : 0,2-1,0 %, molybdène : 0,5-2,5 %, manganèse : 0,5-1,0 %, fer : complément à 100 %.
L'invention s'applique à la production de vitrages bombés.

EP 0 427 617 A1

# UTILISATION DE CERTAINES COMPOSITIONS DE FONTE POUR DES FORMES DE BOMBAGE PAR PRESSAGE DE FEUILLES DE VERRE

La présente invention a trait aux techniques de bombage par pressage de feuilles de verre et concerne plus précisément l'emploi de fontes de compositions particulières pour réaliser des formes de bombage. L'invention s'applique à la fabrication de vitrages bombés destinés notamment aux véhicules automobiles.

Bien que différents avantages plaident en faveur de l'utilisation de la fonte pour la fabrication des formes de bombage, notamment en raison de la possibilité d'un moulage, en pratique on ne l'utilise pas comme matériau de base des outils de bombage de feuilles de verre. Ceci s'explique par la difficulté qu'il y a à conserver leur forme primitive à des outils en fonte, ceci en raison de la dilatation thermique qui se produit aux températures de la chambre de bombage et qui entraîne au cours du temps des réarrangements de la structure de la fonte (voir FR-B-962 285 ou les brevets équivalents US-A-2 330 279 et US-A-2 302 764). Les fontes de composition ordinaire sont tout particulièrement inadaptées aujourd'hui où l'exigence d'une stabilité de forme des outils de bombage est devenue une exigence première car on cherche à obtenir une parfaite conformité au galbe des feuilles de verre bombées.

L'invention a pour but de trouver des compositions d'alliages de fonte pouvant être employées pour la fabrication de formes de bombage car ne présentant pas cet inconvénient connu d'un changement de forme et de volume aux températures d'emploi des formes de bombage.

Il a été trouvé selon l'invention que ce but est atteint avec une fonte à structure perlitique-ferritique dont la composition entre dans les limites suivantes, exprimées en pourcentages pondéraux :

| * carbone | 3,0 - 3,6 % |
|---|---|
| * silicium | 1,5 - 2,5 % |
| * chrome | 0,2 - 1,0 % |
| * molybdène | 0,5 - 2,5 % |
| * manganèse | 0,5 - 1,0 % |
| * fer | complément à 100 % |

Du brevet DE-A-1 287 593, il est connu des fontes dont les compositions correspondent pour l'essentiel à ces limites, mais qui sont utilisées exclusivement pour la fabrication d'éléments de laminage à chaud de pièces en acier, utilisation où sont recherchées plus particulièrement des qualités de ténacité, de résistance à l'usure et une insensibilité aux chocs thermiques, mais où le problème de dilatation thermique n'est pas spécialement critique.

Des fontes de cette composition conviennent que leur structure soit du type à graphite lamellaire ou à graphite sphéroïdal. Elles ont une résistance thermique suffisante et la dilation thermique observée après une utilisation permanente à la température de bombage est environ 10 fois plus faible que pour une fonte ordinaire.

En dehors des composants principaux énumérés plus haut, l'alliage utilisé peut également comporter un ou plusieurs additifs suivants, dans les limites indiquées :

| * cuivre | jusqu'à 0,5 % |
|---|---|
| * phosphore | jusqu'à 0,25 % |
| * soufre | jusqu'à 0,1 % |

Les formes de bombage selon l'invention sont produites par les techniques usuelles de fonderie et de travail de la fonte.

## Revendications

1. Utilisation pour des formes de bombage par pressage de feuilles de verre d'une fonte de type perlitique-ferritique dont la composition entre dans les limites suivantes, exprimées en pourcentages pondéraux :

| * carbone | 3,0-3,6 % |
|---|---|
| * silicium | 1,5-2,5 % |
| * chrome | 0,2-1,0 % |
| * molybdène | 0,5-2,5 % |
| * manganèse | 0,5-1,0 % |
| * fer | complément à 100 %. |

2. Procédé selon la revendication 1, **caractérisé en ce que** ladite fonte a une structure à graphite lamellaire.

3. Procédé selon la revendication 2, **caractérisé en ce que** ladite fonte a une structure à graphite sphéroïdal.

4. Procédé selon l'une des revendications 1 à 3, **caractérisé en ce que** ladite fonte comprend de plus jusqu'à 0,5 % de cuivre.

5. Procédé selon l'une des revendications 1 à 4, **caractérisé en ce que** ladite fonte comprend de plus jusqu'à 0,25 % de phosphore.

6. Procédé selon l'une des revendications 1 à 5, **caractérisé en ce que** ladite fonte comprend de plus jusqu'à 0,1 % de soufre.

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | E. PIWOWARSKY: "Hochwertiges Gusseisen (Grauguss)", édition 2, 1958, pages 1020-1025, Springer-Verlag, Berlin, DE; "Gusseisen für Glasformen"<br>* Page 1023, alliage no. 12 *<br>— — — | 1 | C 22 C<br>37/06<br>C 03 B 23/03 |
| A | US-A-1 910 034 (MITCHELL et al.)<br>* Revendications 1-5; page 2, lignes 54-76 *<br>— — — | 1 | |
| A | GB-A-4 158 76 (STOKES et al.)<br>* Complete specification; revendications 1,2; page 2, lignes 13-22,41-63 *<br>— — — | 1,5,6 | |
| A | GB-A-5 399 22 (STOKES et al.)<br>* Revendications 1,2 *<br>— — — | 1,5,6 | |
| A | DE-C-7 197 89 (MEIER & WEICHELT EISEN- UND STAHLWERKE)<br>* Revendication *<br>— — — — — | 1 | |

### DOMAINES TECHNIQUES RECHERCHES (Int. Cl.5)

C 22 C 37/06
C 03 B 23/03

Le présent rapport de recherche a été établi pour toutes les revendications

| Lieu de la recherche | Date d'achèvement de la recherche | Examinateur |
|---|---|---|
| La Haye | 06 février 91 | LIPPENS M.H. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant